# EUROPEAN PATENT SPECIFICATION

(11) **EP 0 968 659 B1**
(45) Date of publication and mention of the grant of the patent: **03.03.2004**
(21) Application number: 98202188.3
(22) Date of filing: 30.06.1998
(51) Int. Cl.: A23L 1/16

(54) **Cooked, acidified noodles**
Gekochte, angesäuerte Nudeln
Nouilles cuites acidifiées

(43) Date of publication of application: 05.01.2000
(73) Proprietor: SOCIETE DES PRODUITS NESTLE S.A., 1800 Vevey (CH)
(72) Inventor: Meyer, Philipp Paul, 8121 Benglen (CH); Scoville, Eugene, New Milford, CO 06776 (US); Jaelminger, Göran, 256 61 Helsingborg (SE)
(74) Representative: Thomas, Alain

(56) References cited:
- EP-A- 0 484 669
- EP-A- 0 602 953
- EP-A- 0 745 331
- EP-A- 0 807 386
- FR-A- 2 502 907
- US-A- 4 552 772
- US-A- 4 828 852
- US-A- 5 332 587
- DATABASE WPI Section Ch, Week 8917 Derwent Publications Ltd., London, GB; Class D13, AN 89-127505 XP002075686 & JP 01 074958 A (SHOWA SANGYO CO) , 20 March 1989
- PATENT ABSTRACTS OF JAPAN vol. 008, no. 218 (C-245), 4 October 1984 & JP 59 102365 A (TOUYOU SUISAN KK), 13 June 1984

## Description

The present invention relates to a noodle product consisting of cooked or precooked noodle having a long shelf life.

FR2502907 (BUITONI) discloses the production of precooked solid food, especially pasta products and rice, by precooking the food in acidulated water, cooling in acidulated water, draining off excess water, oiling, insertion into flexible containers and heat sterilising the sealed containers.

EP0489811 (MARS) discloses a process for preparing an acid stabilised pasta, which comprises cooking the pasta in an aqueous acid solution or suspension having a pH of from 2.0 to 4.0 and containing a polymeric food-acceptable acid.

EP0626137 (CPC) discloses a pasteurised, shelf-stable, uncooked or partially cooked moist pasta product packaged in a sealed container, the pasta having a moisture content from about 15 to about 38% and a pH below about 4.6.

EP084083 (SOCIETE DES PRODUITS NESTLE) discloses a process for the manufacture of noodle, in which a mixture of cereal semolina or flour and water is prepared in a twin-screw kneader, the mixture is converted into a band by pressing it through a die with an oblong outlet orifice, the band is laminated and it is cut into noodle.

The object of the present invention is to provide a process for manufacturing a full moisture shelf stable noodle product of outstanding quality which is intended to be consumed after simply heating up or very shortly cooking.

The full moisture shelf stable noodle product obtained has a pH of from 3.7 to 4.5, preferably from 3.8 to 4.3, and comprises a cooked or precooked noodle having a dry matter content of from 30 to 45% by weight, an acid and an oil.

The process for manufacturing a full moisture shelf stable noodle product consists of preparing a mixture having a dry matter content of from 60 to 75% and comprising a cereal flour or semolina and added water, kneading the mixture to obtain a dough, sheeting the dough, laminating the sheet thus obtained, slitting the laminated sheet to obtain noodle, cutting the noodle, portioning, blanching, water cooling, dipping into an acidified water, oiling, packaging and in pack pasteurising it.

In the present text, the term "noodle" used as such denotes in the general sense any pasta or noodles based on cereal semolina or flour having the shape of a relatively thin band with a section which is generally rectangular, or curved in the form of a semi-tube, or oval, for example.

The expression "western noodles" denotes pastas having such a shape, which are generally prepared from hard wheat semolina and water, and which can be expected to have a firm texture under the teeth, in other words an "al dente" texture, after cooking in salt water for a sufficient period.

The expression "oriental noodles" denotes pastas having such a shape, which are generally prepared from soft wheat flour and kansui, and which can be expected to have a bouncy texture under the teeth after relatively brief cooking in a sufficient quantity of water with which they are intended to be consumed, for example.

The term "kansui" denotes an aqueous alkaline solution, namely water in which is dissolved a composition of salts comprising especially NaCl, carboxymethylcellulose (CMC), K₂CO₃, Na₂CO₃ and/or Na polyphosphate for example. These salts are intended to exert a stabilizing effect on the bouncy texture of oriental noodles during their traditional consumption with their cooking water. Sodium chloride is especially intended to increase the firmness and the taste of oriental noodles. Sodium and potassium carbonates are especially intended to lead to a firm and bouncy texture. Sodium polyphosphate is especially intended to improve the hydration and water holding and to lean to a clean bite. CMC is especially intended to increase the holding of the texture.

The cooked or precooked noodle may have been made of a starting raw material mixture comprising a cereal flour or semolina, especially Durum or hard wheat semolina or soft wheat flour, and possible additives such as wheat protein, especially gliadin enriched wheat protein, starch, egg material, kansui salts, a colouring agent, bakery powder, sodium chloride, polysaccharides and/or spices, for example.

The acid may be any food grade acid, especially lactic acid, phosphoric acid, citric acid or Glucono-delta-lactone, for example.

The oil may be a vegetable oil, in an amount of from 0.5 to 5% by weight of the cooked or precooked noodle, for example. The oil may especially be peanut oil, rapeseed oil, sunflower oil, palm oil, corn oil, palm olein or mixtures thereof, for example. About from 0.5 to 2.5% of emulsifiers may advantageously be added to the oil, in % by weight of the oil, especially a monoglyceride or mixtures of monoglycerides, for example.

To implement the present process, a mixture may be prepared having a dry matter content of from 60 to 75% and comprising added water, a cereal flour or semolina; especially Durum or hard wheat semolina or soft wheat flour, and possible additives such as wheat protein, especially gliadin enriched wheat protein, oil, starch, egg material, kansui salts, a colouring agent, bakery powder, sodium chloride, polysaccharides and/or spices, for example.

It is possible to use in particular a hard wheat semolina having a particle size of 250-350 µm to manufacture western noodles, or a soft wheat flour having a particle size of 50-150 µm to prepare oriental noodles for example.

Wheat protein, especially common wheat gluten or gliadin enriched wheat protein such as the product marketed under the name Flavor Pro by the company Midwest Grain Products Inc., Atchison, Kansas, USA, may be used in an amount of from about 1 to 3% by weight of the mixture, in order to reduce stickiness and starch losses during cooking and acidification, for example.

Egg material in the form of whole egg powder, egg white powder or liquid whole egg may be added to the mixture in order to increase the firmness of the noodle product, for example.

Bakery powder, especially a mixture of Glucono-delta lactone and sodium bicarbonate may be added to the mixture in order to create a porous noodle product, for example.

Polysaccharides, especially guar gum, sodium alginate or propylene glycol alginate may be added to the mixture to improve the texture and its holding, for example.

Provision may be made, where necessary, for a premixing and prewetting stage, especially in a rapid paddle mixer which delivers a premix in the form of moistened flour or semolina lumps, such a step making it possible to save on in particular the useful free space in a mixer, for example.

The semolina or flour is mixed with a quantity of water such that the mixture obtained has a water content of from 25 to 40%, preferably from 30 to 35% by weight.

To manufacture western noodles, hard wheat semolina may be mixed with water.

To manufacture oriental noodles, soft wheat flour may be mixed with kansui.

The kansui may comprise from 0.5 to 3% NaCl, up to 1% CMC, from 0.1 to 1% K₂CO₃ and/or Na₂CO₃ and up to 1% Na polyphosphate, for example. A colouring agent such as beta-carotene or riboflavin may also be added thereto, for example.

For preparing the mixture, the ceral flour or semolina and added water or kansui, or the moistened flour or semolina lumps obtained at a premixing and prewetting stage may be dosed, possibly together with oil, into mixing means such as any mixer, kneader and/or extruder well known in the art of making noodle, for example.

The mixture obtained within these mixing means is kneaded to obtain a dough in any known noodle making way, especially by further treatment either within an extruder or a kneader where the mixing step was first carried out or within a further extruder or a further kneader.

The dough thus obtained is sheeted in any known noodle making way, especially by pressing the dough through an oblong orifice by means of an extruder or kneader able to press the dough through such an orifice or by means of a positive pump such as a gear pump, or by pressing the dough between rollers, for example.

A sheet may be formed or obtained in this way which preferably has a thickness of from about 2 to 20 mm, for example.

The sheet is laminated to a thickness of from about 0.6 to 1.5 mm, by passing it through a pair or a succession of pairs of rollers, especially a succession of two to five pairs of rollers with decreasing gaps, for example.

Once the sheet has been laminated, it is slit into strands or noodle of from 1 to 10 mm in width by means of adequate roller knifes, for example.

The slit noodle is then cut to any desired length, especially a length of from 30 to 50 cm, in order to adjust a portion size, and the cuts may be collected to portions of any desired weight, especially a weight of from 70 to 200 g, for example.

The step of portioning, namely cutting the noodle and collecting the cuts to portions which then will be individually packaged, is carried out after the cutting step and before the packaging step.

The noodle is blanched by steaming and hot acid water-spraying, the purpose of water-spraying during steaming being to minimise starch losses during blanching.

The blanching step is carried out at from 95 to 100°C for from 1 to 10 min, while steaming with steam at from 98 to 100°C and spraying acidified water at from 95 to 98°C, having a pH of from 3.5 to 5.0.

During the blanching step, the water uptake may be such that the noodle then has a dry matter content of from 35 to 52%, preferably of from 39 to 47%, for example.

After the blanching step, the noodle may be advantageously showered with a hot water spray. In other words the noodle may be passed under a shower of hot water, especially of water having a temperature of from about 60 to 70°C, for example, in order to loosen the strands which can be slightly sticky after having been steamed.

Water cooling may be carried out in a bath of water at ambient temperature, namely at a temperature of from about 18 to 35°C, for about 30 s to 2 min, for example.

After water cooling, excess water may be drained off for about 30 s to 2 min, for example.

During the water cooling step, the blanching step may be stopped completely and the water uptake may be such that the noodle has then a dry matter content of from about 30 to 45%, preferably from 33 to 42%, for example.

After water cooling and possibly draining off excess water, the noodle is dipped into an acidified water in order to be acidified to a final pH of from 3.7 to 4.5. To this end, the noodle may be dipped into a water containing from 0.5 to 2.0% acid, especially lactic acid, phosphoric acid, citric acid or Glucono-delta-lactone, at ambient temperature, especially at a temperature of from 18 to 35°C, for from 50 to 250 s, for example.

After this acidifying step, excess acidified water may be drained off for from about 30 s to 2 min, for example.

During the acififying step, there is very little further water uptake. The acidification of the noodle appears to be mainly a result of osmotic equilibration.

The oiling step may be carried out so that the surface of the noodle is coated with oil in an amount of from 0.5 to 5% by weight of the noodle, for example. In order that the oil is well distributed in very fine particle over the noodle surface, about from 0.5 to 2% of emulsifiers, in % by weight of the oil, may be added to the oil, for example.

The oiling step may be carried out either before or during the packaging step. Preferably, the noodle is packaged in a flexible pouch with controlled volume of head space. To this end, the noodle may be dosed into a vertical pouch after its bottom has been sealed and oil may be injected into the pouch before its top is sealed, for example.

Eventually the packaged noodle product is in pack pasteurised.

This in pack pasteurising step may be carried out in a steam medium, while having the temperature in the centre of the pouch reaching a temperature of from 80 to 100°C and holding it for from 1 to 80 min, for example.

The pouches may then be cooled either for from 5 to 15 min in cold water containing a disinfectant, or for from 30 to 60 min by chilled air, at from 5 to 15°C, for example.

The present process may be implemented by means of normal equipment such as mixer, single or twin screw kneader, single or twin screw extruder, kneader-sheeter equipped with corrugated rollers, rollers having a smooth surface, steeping unit, steam/water spraying blancher, water bath, shower and pasteurising unit from the noodle or noodle industry, for example.

The present process surprisingly provides a noodle product having outstanding organoleptical properties, especially an outstanding texture, in view of the fact that it is not intended to be actually cooked again at the consumer's end but only heated up or very shortly cooked.

After unpacking, heating up or very shortly cooking the present noodle product may be carried out in a pan, in a microwave oven, or by pouring hot or boiling water onto it, for example. Alternatively, the product may be heated up in the package.

The process according to the present invention are illustrated in the following Examples in which the percentages and parts are by weight unless otherwise stated.

### Example 1

A precooked western noodle product having a long shelf life was made from a mixture having a dry matter content of 68.2% and comprising 76% Durum semolina having a particle size of 250-300 µm, 2.35% Flavor Pro 6000 and 21.65% tap water.

Durum semolina and Flavor Pro 6000 were premixed with water in a rapid paddle mixer. The semolina lumps thus obtained were dosed into a kneader where they were further mixed, the mixture was kneaded into a dough, and the dough was sheeted by pressing it by means of a gear pump through a die having a rectangular orifice of 2 mm × 100 mm.

The kneader was a READCO-type TELEDYNE kneader and the gear pump was a VACOREX 90/90-type MAAG pump.

By circulating a heating fluid, a temperature of 48°C was maintained in the kneader barrel.

The kneader was fed with 1000 kg/h of semolina lumps.

The speed of rotation of the kneader screws was adjusted to 70 rpm. The dough was subjected to a relative pressure of 800 kPa in the kneader.

The speed of rotation of the toothed rollers of the gear pump was adjusted to 36 rpm. The relative pressure thus exerted by the pump on the dough was 11,000 kPa.

The sheet leaving the die had a thickness of 3-4 mm.

The sheet was laminated to a thickness of 1.2 mm by passing through four pairs of laminating rollers with successively decreasing gaps of 2.0, 1.5, 1.3 and 1 mm.

The laminated sheet was slit into strands or noodle of 8 mm in width which were cut to about 25 cm in length and portioned or dosed in 104 g portions.

The noodle was then blanched at about 98°C for 200 s along a tunnel blancher in which steam injection means injected steam at 99°C and water spraying means sprayed acidified water having a pH of 4.3 and a temperature of 96-97°C.

During the blanching step, the water uptake was such that the noodle had then a dry matter content of from 41 to 45%.

After the blanching step, the noodle was showered with a hot water spray having a temperature of from 60 to 70°C, and it was then water cooled in a bath of water at from 20 to 25°C for 45 s.

During the water cooling step, the water uptake was such that the noodle had then a dry matter content of from 38 to 42%.

After water cooling, excess water was drained off for 60 s.

The noodle was then dipped into a water bath containing 1.6% lactic acid, having a pH of 2.2-2.3 and having a temperature of 30°C, for 150 s.

During the acififying step, the water uptake was such that the noodle had then a dry matter content of from 36 to 40%.

After the acidifying step, excess acidified water was drained off for 60 s.

After the acidifying step the noodle had a pH of 3.9-4.0.

The noodle portions then weighing about 180 g were dosed into vertical pouches after their bottoms had been sealed, and 1.8 g palmolein were injected into each pouch before their tops were sealed.

The noodle was in pack pasteurised in steam at 97°C, the temperature in the centre of the pouch reaching a temperature of 85°C after 20 min and this temperature being held for 10 min.

The pouches were then cooled for 10 min in water having a temperature of 10°C and containing a disinfectant. The pouches were subsequently stored at room temperature, namely at about 25°C.

The noodle product could be prepared for consumption by unpacking and heating up, for example.

The noodle did not stick together. It had outstanding organoleptical properties, especially a texture similar to the texture of fresh "al dente" cooked western noodles.

### Example 2

A precooked oriental noodle product having a long shelf life was made from a mixture having a dry matter content of 66.6% and comprising 72.45 parts soft wheat flour having a particle size of 50-120 µm, 0.86% palmolein and 26.69% kansui having the composition indicated in Table 1.

**Table 1 :**

| Kansui composition (%) | |
|---|---|
| NaCl | 0.65 |
| CMC | 0.12 |
| K₂CO₃ | 0.53 |
| Na₂CO₃ | 0.24 |
| Na(PO₃)ₙ | 0.30 |
| Riboflavin | 0.02 |
| Soft water | 98.14 |

Soft wheat flour and kansui were premixed in a rapid paddle mixer. The semolina lumps thus obtained were dosed together with the palmolein into a twin screw extruder where they were mixed and kneaded into a crumbly dough having a pH of about 8.

The crumbly dough was then brought into a kneader-sheeter which formed a dough sheet of about 8 mm in thickness.

The sheet was laminated to a thickness of 1.6 mm by passing through five pairs of laminating rollers with successively decreasing gaps of 4.20, 3.50, 2.40, 2.20 and 1.63 mm.

The laminated sheet was slit into strands or noodle of 2 mm in width which were cut to the length of 40 to 42 cm. The cuts were collected to portions of 80 to 82 g.

The noodle was then blanched at about 98°C for 180 s along a tunnel blancher in which steam injection means injected steam at 99°C and water spraying means sprayed acidified water having a pH of 3.7 and a temperature of 96-97°C.

During the blanching step, the water uptake was such that the noodle had then a dry matter content of from 41 to 43%.

After the blanching step, the noodle was showered with a hot water spray having a temperature of from 60 to 70°C, and it was then water cooled in a bath of water at 20°C for 45 s.

During the water cooling step, the water uptake was such that the noodle had then a dry matter content of from 38 to 40%.

After water cooling, excess water was drained off for 60 s.

The noodle was then dipped into a water bath containing 1.5% lactic acid, having a pH of 2.5 and having a temperature of 30°C, for 210 s.

During the acififying step, the water content increased by about 1% and the pH decreased to 3.9 to 4.0.

After the acidifying step, excess acidified water was drained off for 60 s.

The final noodle pH was 4.0 to 4.1 and the final dry matter content was 39 to 41%.

The noodle portions then weighing about 132 g were dosed into vertical pouches after their bottoms had been sealed, and 1.5 g palmolein were injected into each pouch before their tops were sealed.

The noodle was in pack pasteurised in steam at 97°C, the temperature in the centre of the pouch reaching a temperature of 85°C after 18 min and this temperature being held for 10 min.

The pouches were then cooled for 10 min in water having a temperature of 10°C and containing a disinfectant. The pouches were subsequently stored at room temperature, namely at about 25°C.

The noodle product could be prepared for consumption by unpacking and heating up, for example.

The noodle did not stick together. It had outstanding organoleptical properties, especially a bouncy texture similar to the texture of fresh cooked oriental noodles.

## Claims

1. A process for manufacturing a full moisture shelf stable noodle which consists of preparing a mixture having a dry matter content of from 60 to 75% and comprising a cereal flour or semolina and added water, kneading the mixture to obtain a dough, sheeting the dough, laminating the sheet, thus obtained, slitting the laminated sheet to obtain noodle, cutting the noodle, portioning, blanching, water cooling, dipping into an acidified water, oiling, packaging and in pack pasteurising it, in which the blanching step is carried out at from 95 to 100°C for from 1 to 10 min, while steaming with steam at from 98 to 100°C and spraying with acidified water having a pH of from 3.5 to 5.0 at from 95 to 98°C.

2. A process according to claim 1, in which the noodle is dipped into an acidified water containing from 0.5 to 2.0% acid, especially lactic acid, phosphoric acid, citric acid or Glucono-delta-lactone, at ambient temperature, especially at a temperature of from 18 to 35°C, for from 50 to 250 s.

## Patentansprüche

1. Verfahren zur Herstellung einer bei Raumtemperatur lagerstabilen Nudel mit vollem Feuchtigkeitgehalt, das darin besteht, daß man eine Mischung mit einem Trockenmassegehalt von 60 bis 75%, die ein Getreidemehl oder einen Getreidegrieß und zugesetztes Wasser aufweist, herstellt, die Mischung unter Gewinnung eines Teigs knetet, den Teig zu Teigblättern verarbeitet, das Blatt laminiert, das auf diese Weise erhaltene laminierte Blatt schlitzt, um eine Nudel zu erhalten, die Nudel schneidet, portioniert, blanchiert, mit Wasser kühlt, in ein angesäuertes Wasser eintaucht, ölt, verpackt und in der Verpackung pasteurisiert, wobei der Blanchierschritt bei von 95 bis 100°C für von 1 bis 10 min durchgeführt wird, während man mit Dampf von 98 bis 100°C dampfbehandelt und mit einem angesäuerten Wasser mit einem pH von 3,5 bis 5,0 bei von 95 bis 98°C besprüht.

2. Verfahren nach Anspruch 1, bei dem die Nudel in ein angesäuertes Wasser, das von 0,5 bis 2,0% Säure, insbesondere Milchsäure, Phosphorsäure, Zitronensäure oder Gluconsäure-delta-lacton enthält, bei Umgebungstemperatur, insbesondere bei einer Temperatur von 18 bis 35°C, für von 50 bis 250 s getaucht wird.

## Revendications

1. Procédé pour la production de nouilles pleinement humides, stables à la conservation, qui consiste à préparer un mélange ayant une teneur en matière sèche de 60 à 75 % et comprenant une farine ou semoule de céréales et de l'eau ajoutée, à malaxer le mélange pour obtenir une pâte, à mettre la pâte sous forme d'une feuille, à laminer la feuille ainsi obtenue, à fendre la feuille laminée pour obtenir des nouilles, à couper les nouilles, à les répartir en portions, à les blanchir, à les refroidir à l'eau, à les plonger dans de l'eau acidifiée, à les huiler, à les emballer et à les pasteuriser dans l'emballage, dans lequel l'étape de blanchiment est mise en oeuvre à une température de 95 à 100°C pendant un temps de 1 à 10 min, en effectuant un traitement à la vapeur d'eau, avec de la vapeur d'eau à une température de 98 à 100°C, et en pulvérisant de l'eau acidifiée ayant un pH de 3,5 à 5,0 à une température de 95 à 98°C.

2. Procédé suivant la revendication 1, dans lequel les nouilles sont plongées dans de l'eau acidifiée contenant 0,5 à 2,0 % d'un acide, notamment d'acide lactique, d'acide phosphorique, d'acide citrique ou de glucono-delta-lactone, à température ambiante, notamment à une température de 18 à 35°C, pendant un temps de 50 à 250 s.
